# EUROPÄISCHE PATENTANMELDUNG

(11) **EP 2 446 995 A1**
(43) Veröffentlichungstag der Anmeldung: **02.05.2012**
(21) Anmeldenummer: 11008700.4
(22) Anmeldetag: 31.10.2011
(51) Int. Cl.: B23D 63/04

(54) **Vorrichtung zum Schränken von Sägeblättern**

(30) Priorität: 30.10.2010 DE 102010050236
(71) Anmelder: Haas Maschinenbau GmbH, 42855 Remscheid (DE)
(72) Erfinder: Haas, Hans R., 42853 Remscheid (DE)
(74) Vertreter: Füssel, Michael

(57) **Zusammenfassung**

Die Erfindung betrifft eine Vorrichtung zum Schränken von Sägeblättern mit Schränkeisen, die mit ihren Kopfflächen (5) in einer Grundstellung klemmungsfrei am Sägeblatt anliegen. Erfindungsgemäß wird in der Grundstellung der Abstand (8) zwischen der Zahnbreitfläche (9) eines jeweils ungeschränkten Zahns (10) und derjenigen Kopffläche (5) des Schränkeisens, mit welcher der Zahn (10) geschränkt wird, von oben auf den Zahn (10) gesehen von dessen Zahnspitze (11) entlang des Zahnrückens (12) in Richtung zum Zahngrund (13) des nachfolgenden Zahns größer. Durch diese Maßnahme wird eine Konzentration von hohen Eigenspannungen nach der Schränkung zum Beispiel im Bereich der Zahnspitze vermieden.

## Beschreibung

Die vorliegende Erfindung betrifft eine Vorrichtung zum Schränken von Sägeblättern nach Oberbegriff des Hauptanspruchs.

Eine derartige Vorrichtung ist beispielsweise aus der DE 86 27 736 U1 bekannt. Hierbei handelt es sich um eine Vorrichtung mit jeweils beidseits des zu schränkenden Sägeblatts angeordneten und das Sägeblatt unterhalb der Zahnfußlinie einspannenden Spannköpfen. Oberhalb der Zahnfußlinie sind jeweils beidseits des Sägeblatts Schränkeisen angeordnet. Die Schränkeisen sind aus beiden Richtungen quer zum Sägeblatt gegen die Zähne beweglich und zu diesem Zweck auf Werkzeugträgern aufgebracht. Zur Lagerung der Werkzeugträger sind konzentrisch zur Biegeachse angeordnete Ringlager vorgesehen, wobei das zu schränkende Sägeblatt durch diese Ringlager geradlinig hindurchführbar ist. Mit den in dieser Druckschrift beschriebenen Maßnahmen ergibt sich zwar für das zu schränkende Sägeblatt eine einwandfreie, unverwundende Führung, die sich zugleich auch vorteilhaft hinsichtlich einer genauen Verformung des Sägeblatts auswirkt, jedoch müssen die Schränkeisen vor jedem Schränkvorgang neu zugestellt werden.

Die EP 0 742 067 B1 beschreibt eine in Rede stehende Vorrichtung, bei welcher die Schränkeisen mit ihren Kopfflächen in einer Grundstellung klemmungsfrei am Sägeblatt anliegen. Hierdurch kann das Sägeblatt in Längsrichtung zwischen den Schränkeisen hindurchgeführt werden, ohne dass die Schränkeisen aus der Grundstellung vom Sägeblatt zurückgestellt werden müssen. Die Schränkeisen können dabei prinzipiell senkrecht zur Sägeblattebene verfahrbar sein, um den Schränkvorgang auszuführen. Eine in dieser Druckschrift beschriebene Weiterbildung sieht ergänzend hierzu vor, dass die Schränkeisen auf einer Kreisbahn geführt werden, wobei die Drehachse der Kreisbahn mit der Anlegelinie der Schränkeisen zusammenfällt, an welcher die Schränkeisen klemmungsfrei am Sägeblatt anliegen.

Ein Vorteil dieser Vorrichtung besteht in der geringen Zahl der notwendigen Freiheitsgrade für die Schränkeisen. Der Schränkvorgang kann daher unter Einsparung mechanischen Aufwands im Genauigkeitsbereich von wenigen 100stel Millimetern durchgeführt werden. Einhergehend mit der geringen Zahl der Freiheitsgrade für die Schränkeisen kann jedoch davon ausgegangen werden, dass eine für jeden Zahn individuell bemessene Ausschränkung, zum Beispiel im Rahmen einer vorgesehenen Stufenschränkung, nur mit einer Erhöhung des mechanischen Aufwands möglich ist. Als Ausschränkung wird hierbei der Abstand der vom Schränkeisen wegweisenden Eckkante der Schneide eines geschränkten Sägezahns zur Sägeblattebene verstanden.

Weiterhin sind Vorrichtungen bekannt, bei welchen die Zähne zunächst nur durch eine punktuelle Angriffsfläche der Schränkeisen, welche sich während des Schränkvorganges zu einer größeren Angriffsfläche verändert, geschränkt werden. Die hierbei auftretenden Relativbewegungen zwischen Schränkeisen und Seitenflanke führt aber zu Schärfeverlusten am Zahn. Bei einer Betrachtung der so geschränkten Zähne im Querschnitt fällt auf, dass sich eine eindeutige Biegelinie, entlang derer die Zähne geschränkt sind, nicht feststellen lässt. Im Hinblick auf eine Verringerung der Gefahr von Zahnbruch, kann dies aber durchaus als vorteilhaft betrachtet werden, lässt sich aber nicht ohne weiteres im Hinblick auf eine Schränkung im Genauigkeitsbereich von wenigen 100stel Millimetern, sowie im Hinblick auf eine Schränkung ohne Schärfeverluste, realisieren.

Die Aufgabe der vorliegenden Erfindung besteht darin, den Schränkvorgang dahingehend zu verbessern, dass die Gefahr von Zahnbruch verringert wird, dabei aber sichergestellt ist, dass der Schränkvorgang, auch im Hinblick auf eine individuelle Ausschränkung vorbestimmter Zähne, im Genauigkeitsbereich von wenigen 100stel Millimetern durchführbar ist.

Diese Aufgabe löst die Erfindung mit den Merkmalen des Hauptanspruchs.

Erfindungsgemäß wird in der Grundstellung der Abstand zwischen der Zahnbreitfläche eines jeweils ungeschränkten Zahns und derjenigen Kopffläche des Schränkeisens, mit welcher der Zahn geschränkt wird, von oben auf den Zahn gesehen von dessen Zahnspitze entlang seines Zahnrückens in Richtung zum Zahngrund des nachfolgenden Zahns größer.

Die erfindungsgemäße Anordnung der Kopfflächen gegenüber der jeweiligen Zahnbreitfläche in der Grundstellung hat folgenden vorteilhaften Effekt. Mit Einleitung einer Zustellbewegung der jeweiligen Kopffläche aus der Grundstellung gegen die jeweilige Zahnbreitfläche erfolgt der Schränkvorgang zunächst entlang der vollen Zahnhöhe im Bereich der Zahnspitze. Mit fortschreitender Zustellung der Kopffläche nimmt im weiteren Schränkverlauf die Größe ihres Flächenbereiches, mit der sich die Kopffläche im Angriff mit der Zahnbreitfläche befindet, von der Zahnspitze entlang des Zahnrückens in Richtung zum Zahngrund des nachfolgenden Zahns stetig zu. Der Freiheitsgrad der Schränkeisen ist dabei vorteilhafter Weise auf eine Bewegungsrichtung beschränkt, wobei nun über die Kontur der Kopfflächen ein weiterer Freiheitsgrad hinzukommt, um die Form des geschränkten Zahns zu bestimmen.

Einerseits wird hierdurch während des Schränkvorganges eine hinreichend präzise Seitenführung des jeweiligen Zahns sichergestellt, um einen vorbestimmten Schränkwinkel in einem Genauigkeitsbereich von wenigen 100stel Millimetern, bezogen auf die Ausschränkung des jeweiligen Zahns, zu erreichen. Andererseits weist der erfindungsgemäß geschränkte Zahn in Querrichtung gesehen eine vom Zahnfuß ausgehende Verkrümmung auf, die im Kopfbereich des Zahns unter Einhaltung des vorbestimmten Schränkwinkels ausläuft, wobei der Kopfbereich von oben gesehen zusätzlich gegenüber der Sägeblattebene verdreht ist.

Die Erfindung hat erkannt, dass bezogen auf Zähne, die in bekannter Weise entlang einer eindeutigen Biegelinie geschränkt sind, die erfindungsgemäß geschränkten Zähne nicht in einem einzigen linienorientierten Biegebereich gestaucht bzw. gestreckt sind, sondern vielmehr einen großflächig orientierten Biegebereich aufweisen. Die Krafteinwirkung für eine plastische Verformung des Zahns verteilt sich über den sich vergrößernden Flächenbereich, mit welchem sich die Kopffläche, über die Zeit des Schränkverlaufes gesehen, im zunehmenden Angriff mit der Zahnbreitfläche befindet. Die Krafteinwirkung für eine bleibende Verformung im Bereich eines jeden infinitesimalen Flächenbereiches der Zahnbreitfläche nimmt mit zunehmendem Schränkverlauf ab und im geschränkten Zahn selbst wird eine Konzentration von aus der Schränkung resultierenden Eigenspannungen innerhalb eines kleinen Flächenbereiches der Zahnbreitfläche vermieden. Stattdessen erfolgt die Intensität der Krafteinwirkung für eine bleibende Verformung des Zahns, und damit eine Initialisierung von Eigenspannungen im Zahn, über die Funktion des Flächenverlaufes der Kopfflächen gegenüber ihrer Lage zu den Zahnbreitflächen. Die besagten Eigenspannungen werden erfindungsgemäß großflächig über die Zahnbreitfläche verteilt, wobei die Werte der Eigenspannungen innerhalb kleiner Flächenbereiche der Zahnbreitfläche besonders klein Ausfallen können.

Aus diesem Grund kann mit einer verminderten Zahnbruchgefahr während des Betriebs eines erfindungsgemäß geschränkten Sägeblattes ausgegangen werden.

Unter Berücksichtigung der erfindungsgemäßen Grundlagen ist es ohne weiteres vorstellbar, dass eine funktionelle Abhängigkeit des Flächenverlaufes der Kopfflächen zur Lage der Zahnbreitflächen gefunden wird, die eine kleinstmögliche Initialisierung von Eigenspannungen nach der Schränkung zur Folge hat. Bezüglich der Zahnbreitfläche kann die Kopffläche beispielsweise konkav gekrümmt, konvex gekrümmt oder auch als ebene Fläche ausgeführt sein.

Zwar ist zum Beginn einer erfindungsgemäßen Schränkung die Kontaktzone zwischen der Kopffläche und der Zahnbreitfläche eher punktweise bis linienförmig orientiert, mit der erfindungsgemäßen Anordnung der Kopffläche bezüglich der Zahnbreitfläche wird jedoch ein Schränkablauf realisiert, der trotz einer zunächst punktuell orientierten Angriffsfläche in überraschender Weise ein Schärfeverlust des jeweils erfindungsgemäß geschränkten Zahns vermeidet.

Weiterhin kann die Größe der Ausschränkung eines jeweiligen Zahns ohne weiteres zum Beispiel durch das Maß der Steigung beeinflusst werden, mit welcher alle Oberflächenstellen der jeweiligen Kopffläche von oben auf den Zahn gesehen von der Zahnspitze entlang des Zahnrückens in Richtung zum Zahngrund des nachfolgenden Zahns von der jeweiligen Zahnbreitfläche zurückspringen. Mit einer derartig bemessenen Anordnung der Kopfflächen können beispielsweise Zähne einer vorbestimmten Zahngruppe in einfacher Weise mit einer individuellen Ausschränkung, z.B. im Rahmen einer Stufenschränkung, versehen werden.

Ein weiteres Merkmal der erfindungsgemäß gestalteten Kopfflächen besteht darin, dass die Kopfflächen, in Längsrichtung auf die Schmalseite des Zahnrückens eines Zahns gesehen, eine von der Unterkante der jeweiligen Kopffläche kommende, in Höhenrichtung des Zahns zu der Oberkante der jeweiligen Kopffläche verlaufende, der Zahnspitze zugewandte vordere Sichtkante und eine ebenso verlaufende, dem Zahngrund zugewandte hintere Sichtkante aufweisen.

In der beschriebenen Blickrichtung können beide Sichtkanten, insbesondere die vordere Sichtkante, schon mit bloßem Auge zu erkennen sein. Dies bedeutet, dass in Zustellrichtung der Kopffläche der Bereich der vorderen Sichtkante als erstes Kontakt mit den jeweils zu schränkenden Zahn hat.

Als Bemessungsgrundlage für die Kopfflächen, insbesondere im Hinblick auf eine vorbestimmte Ausschränkung innerhalb eines vorbestimmten Schränkwinkels, wird vorgeschlagen, dass die zur Unterkante parallel liegenden und zwischen den Sichtkanten verlaufenden Höhenlinien der jeweiligen Kopfflächen von der Unterkante zur Oberkante der Kopffläche einen gleich bleibenden Abstand zur Zahnbreitfläche aufweisen.

Mit dieser Maßnahme kann beispielsweise erreicht werden, dass die Kopffläche nur mit der vorderen Sichtkante klemmungsfrei am Sägeblatt anliegt und alle anderen Oberflächenstellen der Kopffläche gegenüber der Zahnbreitfläche berührungsfrei zurückspringen.

Ergänzend hierzu wird vorgeschlagen, dass die zur Unterkante parallel liegende und zwischen den Sichtkanten verlaufenden Höhenlinien der jeweiligen Kopffläche von der Unterkante zur Oberkante der Kopffläche einen zunehmenden Abstand zur Zahnbreitfläche aufweisen.

Hierbei ist vorstellbar, dass die Kopffläche ausschließlich mit der Unterkante klemmungsfrei am Sägeblatt anliegt und alle anderen Oberflächenstellen der Kopffläche gegenüber dem Sägeblatt berührungsfrei zurückspringen. In einer besonderen Ausführungsform dieser Maßnahme ist es denkbar, dass die Kopfflächen ausschließlich mit der zur Unterkante zugewandten Ecke der vorderen Sichtkante am Sägeblatt klemmungsfrei anliegen. Mit den erfindungsgemäßen Maßnahmen ist es daher möglich, dass die Kopfflächen in der Grundstellung allerhöchstens punktweise am Sägeblatt klemmungsfrei anliegen.

Ausgehend von den oben beschriebenen Bemessungsgrundlagen für die Kopffläche wird vorgeschlagen, dass die Kopffläche gegenüber der Zahnbreitfläche eines zu schränkenden Zahns, ausgehend von dessen Zahnspitze und der Unterkante der Kopffläche, unter einem vorbestimmten Drehschränkungswinkel von z.B. 4° zurückspringt. Mit einer derartigen Konstruktionsvorgabe können die erfindungsgemäßen Kopfflächen mit den oben beschriebenen Merkmalen besonders einfach hergestellt werden. Im Fall eines von der Unter- bis zur Oberkante konstant bleibenden Drehschränkungswinkels bleibt der Abstand der Kopffläche zur Zahnbreitfläche, ausgehend von einem beliebigen Punkt auf der Unterkante senkrecht in Richtung zur Oberkante, stets gleich. Im Fall eines von der Unter- zur Oberkante der Kopffläche größer werdenden Drehschränkungswinkels, wird der besagte Abstand von einem Punkt der Unterkante senkrecht in Richtung zur Oberkante ebenfalls größer.

Vorzugsweise schließen die einander zugewandten Kopfflächen der Schränkeisen zumindest im Bereich ihrer jeweiligen vorderen Sichtkante zwischen sich in der Grundstellung einen Kopfflächenwinkel ein, der größer oder höchstens gleich dem Schränkwinkel ist, welcher die geschränkten Zähne einhüllt. Diese Maßnahme stellt sicher, dass das geschränkte Sägeblatt zwischen den sich in Grundstellung befindlichen Kopfflächen der Schränkeisen berührungsfrei hindurchführbar ist.

Erfindungsgemäß ist es vorstellbar, dass eine Folge aus Zähnen mit unterschiedlich großen Schränkwinkeln von einem einzigen Schränkeisenpaar geschränkt wird und hierzu an den gegenüberliegenden Schränkeisen eine Vielzahl von Paarungen von einander zugewandten Kopfflächen vorgesehen ist, die jeweils unterschiedlich große Kopfflächenwinkel einschließen. In diesem Fall ist der größte vorkommende Schränkwinkel kleiner, als der kleinste vorkommende Kopfflächenwinkel, so dass ein berührungsfreies Hindurchführen des geschränkten Sägeblatts zwischen den Kopfflächen auch in dieser Ausführungsform sichergestellt ist.

Weiterhin ermöglicht die Erfindung die Verwendung in einer Schränkmaschine, bei welcher das Schränkeisen jeder Seite auf einer kreisförmigen Führungsbahn geführt ist, wobei alle Kopfflächen des jeweiligen Schränkeisens entlang einer gemeinsamen Anlegelinie klemmungsfrei am Sägeblatt anliegen und wobei die Drehachse der jeweiligen Führungsbahn des Schränkeisens mit der jeweiligen Anlegelinie des Schränkeisens zusammenfällt.

Eine mögliche Schränkvorrichtung mit diesen Merkmalen ist im eingangs genannten Europäischen Patent offenbart, worauf zur Vermeidung von Wiederholungen in vollem Umfang Bezug genommen wird.

Es ist daher ohne weiteres vorstellbar, dass die dort beschriebene Vorrichtung leicht zur Aufnahme der erfindungsgemäßen Schränkeisen umgerüstet werden kann, indem zum Beispiel die beiden dort beschriebenen auf Wälzlagern gelagerten Schränktrommeln zur Aufnahme der erfindungsgemäßen Schränkeisen vorgerichtet werden.

Weiterhin wird vorgeschlagen, dass die Schränkeisen zum kompletten Schränken eines vorbestimmten Verzahnungsintervalls vorgesehen werden. Das Verzahnungsintervall kann beispielsweise aus einer Zahngruppe mit variabler Zahnteilung bestehen. Mit den vorab beschriebenen Bemessungsgrundlagen für die Kopfflächen gegenüber den Zahnbreitflächen ist es hierbei vorstellbar, dass jeweils eine Kopffläche der Schränkeisen einem vorbestimmten ungeschränkten Zahn der zu schränkenden Zahngruppe zugeordnet ist und für eine individuelle Schränkung des Zahns bemessen ist.

Die geschränkten Zähne der Zahngruppe können beispielsweise in aufeinander folgender Weise abwechselnd nach links und nach rechts aus der Sägeblattebene ausgeschränkt sein. Vorzugsweise ist die Zahngruppe in Zahnuntergruppen unterteilt, wobei jeweils eine gerade Anzahl aufeinander folgender Zähne mit jeweils gleich großen Ausschränkungen in unterschiedlichen Richtungen zu einer Zahnuntergruppe zusammengefasst ist. Eine Zahngruppe kann von einer einzigen Zahnuntergruppe oder auch von zwei, drei, vier oder mehr Zahnuntergruppen gebildet werden. Die jeweiligen Ausschränkungen von aufeinander folgenden Zahnuntergruppen können in ihrem Betrag gleich bemessen sein oder bilden vorzugsweise eine Stufenschränkung, bis die nächste Zahngruppe beginnt. Die nächste Zahngruppe weist vorzugsweise die gleiche Schränkfolge und Schränkweise auf, wie die vorhergehende Zahngruppe.

Erfindungswesentlich ist hierbei, dass zumindest eine Zahngruppe, die aus einer Vielzahl von Zähnen mit jeweils im Rahmen einer Stufenschränkung unterschiedlich bemessenen Ausschränkungen besteht, von einem einzigen Schränkeisenpaar in nur einem einzigen Arbeitsgang geschränkt werden kann.

Die Zahngruppe kann beispielsweise Zähne zum Vorschneiden, Zähne zum Fertigschneiden und ungeschränkte Räumzähne aufweisen, wobei die geschränkten Zähne zum Fertigschneiden gegenüber den geschränkten Zähnen zum Vorschneiden eine größere Ausschränkung aufweisen. Eine bevorzugte Stufenschränkung ist beispielsweise bei großen Profilträgern und großen Werkstücken mit hohen Eigenspannungen besonders vorteilhaft, da mit dieser Schränkung ein besonders großer Schnittkanal realisiert wird, der ein Verklemmen des Sägeblatts verhindert.

Um die Räumzähne während des Schränkvorganges nicht durch die Kopfflächen der Schränkeisen zu beaufschlagen wird vorgeschlagen, dass die Schränkeisen zwischen den Kopfflächen in Längsrichtung des Sägeblatts verlaufende Lücken aufweisen, mit denen beim Schränkvorgang keine Schränkung der Räumzähne erfolgt.

Im Folgenden wird die Erfindung anhand von Ausführungsbeispielen näher erläutert. Es zeigen:
- Fig.1: eine erfindungsgemäße Schränkvorrichtung im Querschnitt;
- Fig.2a: ein zwischen zwei sich in Grundstellung befindlichen Schränkeisen befindliches Sägeblatt in Ansicht von oben auf die Zähne;
- Fig.2b: die Schränkeisen gemäß Fig.2a mit einer alternativen Ausführungsform der Kopfflächen;
- Fig.3a bis 3c: verschiedene Ausführungsformen von erfindungsgemäß gestalteten Kopfflächen der Schränkeisen;
- Fig.4: eine Gegenüberstellung der erfindungsgemäßen Schränkung mit konventionellen Schränkungen.

Sofern im Folgenden nichts anders gesagt ist, gilt die folgende Beschreibung stets für alle Figuren.

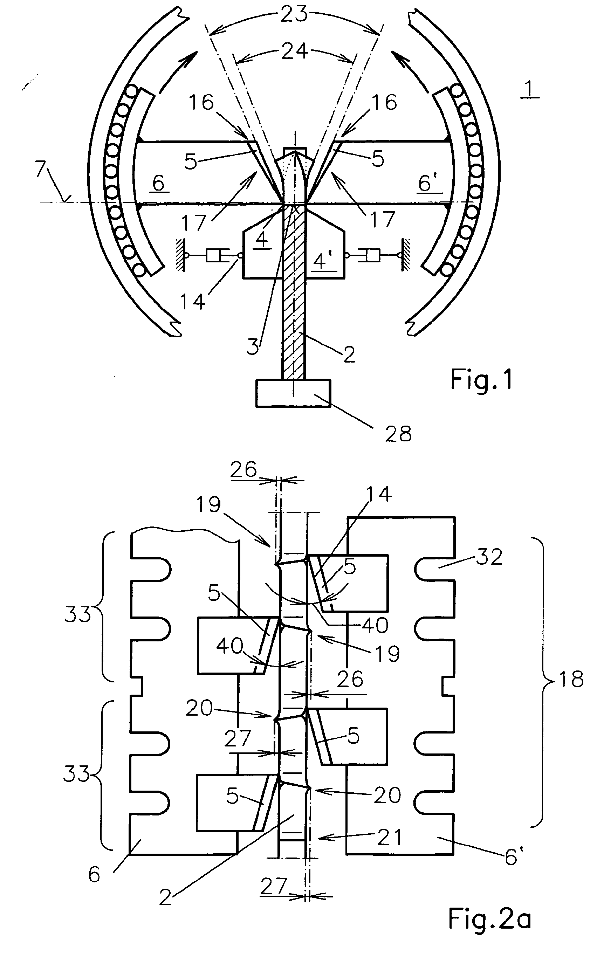

Insbesondere Fig.1 zeigt eine erfindungsgemäße Vorrichtung 1 zum Schränken von Sägeblättern 2 mit jeweils beidseits des Sägeblatts 2 angeordneten und das Sägeblatt 2 unterhalb der Zahnfußlinie 3 einspannenden Spannköpfen 4,4'. Auf ihrer Oberseite weisen die Spannköpfe 4,4' eine relativ scharfe Kante auf, mit der sie an der Zahnfußlinie 3 ihrer zugehörigen Sägeblattseite anliegen. Mittels einer Höheneinstellvorrichtung 28, welche sich in bekannter Weise gegen die Unterseite des Sägeblatts 2 abstützt, lässt sich die Relativposition zwischen Zahnfußlinie 3 und Oberkante der Spannköpfe 4,4' so einstellen, dass die Oberkante der Spannköpfe 4,4' mit den zugehörigen Zahnfußlinien 3 zusammenfallen.

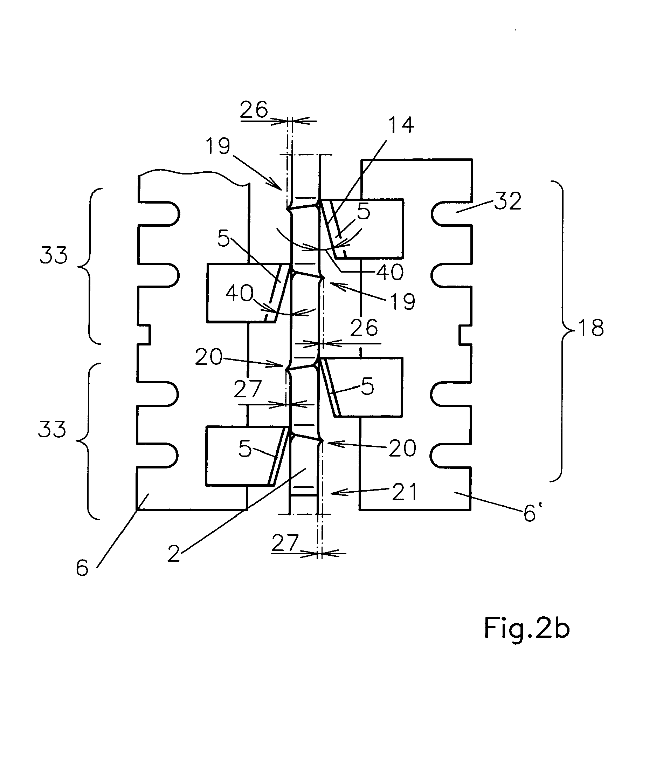

Oberhalb der Zahnfußlinie 3 sind jeweils beidseits des Sägeblatts 2 Schränkeisen 6,6' angeordnet. Bekannter Weise sind derartige Schränkeisen 6,6' an ihrem zum Sägeblatt 2 weisenden Ende fingerförmig ausgebildet. Die Finger weisen die Kopfflächen 5 der Schränkeisen 6,6' auf. Dies wird insbesondere in Fig.2a und Fig.2b dargestellt. Die Schränkeisen 6,6' sind mit den Kopfflächen 5 voran aus beiden Richtungen quer zum Sägeblatt 2 gegen die Zähne beweglich, wobei die Schränkeisen 6,6' mit ihren Kopfflächen 5 in einer Grundstellung 7 klemmungsfrei am Sägeblatt 2 anliegen.

Hierbei zeigt insbesondere Fig.1, dass das Schränkeisen 6,6' jeder Seite auf einer kreisförmigen Führungsbahn geführt ist. Alle Kopfflächen 5 des jeweiligen Schränkeisens 6,6' liegen entlang einer gemeinsamen Anlegelinie klemmungsfrei am Sägeblatt 2 an, wobei die Drehachse der jeweiligen Führungsbahn des Schränkeisens 6,6' mit der jeweiligen Anlegelinie des Schränkeisens 6,6' zusammenfällt. In dem gezeigten Fall handelt es sich bei der kreisförmigen Führungsbahn um eine Wälzkörperlagerung, die sich an einer nicht näher dargestellten ortsfesten Halterung abstützt.

Erfindungsgemäß sind Maßgaben zur Ausrichtung der Kopfflächen 5 bezüglich der jeweils gegenüberliegenden Zahnbreitflächen 9 der zu schränkenden Zähne vorgesehen. Der Vorteil dieser Maßnahmen liegt insbesondere in einem verbesserten Schränkverlauf des jeweils geschränkten Zahns unter Einhaltung eines Genauigkeitsbereiches für die jeweilige Ausschränkung im Bereich von wenigen 100stel Millimetern.

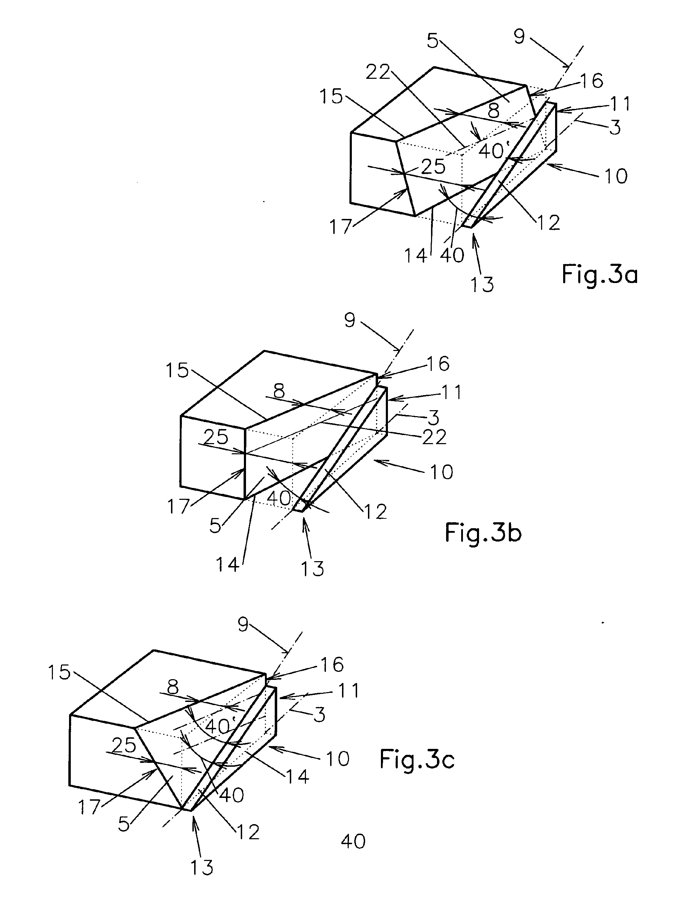

Dies wird erfindungsgemäß erreicht, in dem in der Grundstellung 7 der Abstand 8 zwischen der Zahnbreitfläche 9 eines jeweils ungeschränkten Zahns 10 und derjenigen Kopffläche 5 des Schränkeisens 6,6' mit welcher der Zahn 10 geschränkt wird, von oben auf den Zahn 10 gesehen von dessen Zahnspitze 11 entlang des Zahnrückens 12 in Richtung zum Zahngrund 13 des nachfolgenden Zahns größer wird. Dies wird im Besonderen in den Fig. 3a-3c dargestellt.

Ausgehend von den oben beschriebenen Bemessungsgrundlagen für die Kopffläche 5 springt in den gezeigten Ausführungsbeispielen die Kopffläche 5 gegenüber der Zahnbreitfläche 9 eines zu schränkenden Zahns 10, ausgehend von dessen Zahnspitze 11 und der Unterkante 14 der Kopffläche 5, unter einem vorbestimmten Drehschränkungswinkel 40 zurück. Mit einer derartigen konstruktiven Vorgabe können die erfindungsgemäßen Kopfflächen 5 besonders einfach hergestellt werden und führen zu einem vorteilhaften Schränkablauf, der im Folgenden näher beschrieben wird.

Aus den Figuren kann nachvollziehbar entnommen werden, dass mit Einleitung einer Zustellbewegung der Kopfflächen 5 aus der Grundstellung 7 gegen die Zahnbreitflächen 9 zunächst der Schränkvorgang entlang der Zahnhöhe, insbesondere in den in Fig.3a und Fig.3c gezeigten Fällen in voller Zahnhöhe, im Bereich der Zahnspitze 11 erfolgt. Mit fortschreitender Zustellung der Kopfflächen 5 nimmt im weiteren Schränkverlauf die Größe ihres Flächenbereiches, mit dem sich die Kopfflächen 5 im Angriff mit der Zahnbreitfläche 9 befinden, von der jeweiligen Zahnspitze 11 entlang des Zahnrückens 12 in Richtung zum Zahngrund 13 stetig zu.

Insbesondere Fig.1 zeigt, dass die so geschränkten Zähne im Querschnitt gesehen eine von der Zahnfußlinie 3 ausgehende Verkrümmung in Schränkrichtung aufweisen. Darüberhinaus zeigt insbesondere Fig.1, dass die geschränkten Zähne in ihrem Kopfbereich mit ihren Schneiden zusätzlich aus der Sägeblattebene verdreht sind. Hierbei ist sichergestellt, dass während des Schränkverlaufes durch die Kopfflächen 5 eine hinreichend präzise Seitenführung der Zähne sichergestellt wird, so dass die im Kopfbereich der Zähne auslaufende Verkrümmung und Verdrehung unter Einhaltung eines vorbestimmten Schränkwinkels ausläuft, der bezogen auf eine Ausschränkung des Zahns in einem Genauigkeitsbereich von wenigen 100stel Millimetern liegt.

Im Verkrümmungsbereich des jeweils, geschränkten Zahns ist eine Biegelinie, entlang derer die Zähne eindeutig geschränkt sind, nicht feststellbar. Ferner wird hier in vorteilhafter Weise eine großflächige Verteilung von aus der Schränkung resultierenden Eigenspannungen innerhalb des erfindungsgemäß geschränkten Zahns erreicht, da dieser einen großflächig orientierten Biegebereich aufweist. Das erfindungsgemäß geschränkte Sägeblatt 2 neigt im Betrieb weniger stark zum Zahnbruch. Einhergehend mit den erfindungsgemäß verbesserten Stabilitätseigenschaften der geschränkten Zähne ist eine präzise Wiederholbarkeit des Schränkverlaufes für jeden Zahn, der mit einer zugewiesenen Kopffläche 5 geschränkt werden soll, gleichermaßen sichergestellt.

Die Figuren zeigen, dass zwar zum Beginn einer Schränkgung die Kontaktzone zwischen der Kopffläche 5 und der Zahnbreitfläche 9 eher punktförmig bis linienförmig orientiert ist, mit der erfindungsgemäßen Anordnung der Kopfflächen 5 gegenüber den Zahnbreitflächen 9 wird jedoch ein zu schränkender Zahn 10 derart von der Kopffläche beaufschlagt, dass dabei ein Schärfeverlust des jeweils geschränkten Zahns vermieden wird.

Insbesondere aus den Fig.3a und 3c wird ersichtlich, dass die Kopfflächen 5, in Längsrichtung auf die Schmalseite des Zahnrückens 12 eines Zahns 10 gesehen, eine von der Unterkante 14 der jeweiligen Kopffläche 5 kommende, in Höhenrichtung des Zahns 10 zu der Oberkante 15 der jeweiligen Kopffläche 5 verlaufende, der Zahnspitze 11 zugewandte vordere Sichtkante 16 und eine ebenso verlaufende, dem Zahngrund 13 zugewandte hintere Sichtkante 17 aufweisen.

Insbesondere Fig.1 zeigt hierzu, dass in der beschriebenen Blickrichtung beide Sichtkanten 16,17 zu erkennen sind. Die von den Kanten 14,15,16 und 17 begrenzte Kopffläche 5 kann, sofern eine ausreichende Seitenführung der zu schränkenden Zähne 10 im gesamten Schränkverlauf beibehalten wird, bezüglich der Zahnbreitfläche 9 konvex gekrümmt, konkav gekrümmt oder auch als ebene Fläche ausgeführt sein.

Die Größe der Ausschränkung eines Zahnes, sowie dessen auf wenige 100stel Millimeter genauer Verkrümmungsverlauf nach der Schränkung, kann ohne weiteres zum Beispiel durch den Grad bestimmt werden, mit dem sich die Kopffläche 5 von oben auf den Zahn 10 gesehen von der Zahnspitze 11 entlang des Zahnrückens 12 in Richtung des Zahngrunds 13 von der Zahnbreitfläche 9 entfernt. Dieser Grad wird in den gezeigten Ausführungsbeispielen durch den Drehschränkungswinkel 40 vorgegeben. Für eine präzise Ausschränkung des jeweiligen Zahns 10 zeigen insbesondere die Fig.3a-3c bevorzugte Maßgaben, mit denen sich die Kopffläche 5 in besagter Richtung von der Zahnbreitfläche 9 entfernt. Die Fig.3a-3c zeigen hierzu eine schematische Ansicht der Fingerenden der Schränkeisen 6,6' sowie der Zähne 10.

Insbesondere Fig.3b zeigt eine Maßgabe, welche vorsieht, dass die zur Unterkante 14 parallel liegenden und zwischen den Sichtkanten 16,17 verlaufenden Höhenlinien 22 der jeweiligen Kopffläche 5 von der Unterkante 14 zur Oberkante 15 der Kopffläche 5 einen gleich bleibenden Abstand 25 zur Zahnbreitfläche 9 aufweisen. In diesem Fall bleibt der Drehschränkungswinkel 40 von der Unterkante 14 bis zur Oberkante 15 konstant. Dies bedeutet, dass ausgehend von einem Punkt auf der Unterkante 14 senkrecht in Richtung zur Zahnhöhe der Abstand 25 der Kopffläche 5 zur Zahnbreitfläche 9 stets gleich bleibt. Am Anfang der Schränkung greift die vordere Sichtkante 16 in gesamter Höhe des Zahns 10 linienförmig im Bereich seiner Zahnspitze 11 an der Zahnbreitfläche 9 an.

Ergänzend hierzu zeigen die Fig.3a und 3c eine alternative Maßgabe, bei welcher die zur Unterkante 14 parallel liegenden und zwischen den Sichtkanten 16,17 verlaufenden Höhenlinien 22 der jeweiligen Kopffläche 5 von der Unterkante 14 zur Oberkante 15 der Kopffläche 5 einen zunehmenden Abstand 25 zur Zahnbreitfläche 9 aufweisen. Der Drehschränkungswinkel 40 wird in diesen Fällen von der Unterkante 14 zur Oberkante 15 größer. Insbesondere Fig.3a stellt hierzu dar, dass ein an einer oberhalb der Unterkante 14 angeordneten Höhenlinie 22 angreifender Drehschränkungswinkel 40' größer ist, als der an der Unterkante 14 angreifende Drehschränkungswinkel 40. Der Grad mit dem sich die Größe des Drehschränkungswinkels mit zunehmender Annäherung zur Oberkante 5 hin ändert, kann beispielsweise anhand einer mathematischen Funktion vorgegeben sein. Ausgehend von einem Punkt der Unterkante 14 senkrecht in Richtung zur Zahnhöhe nimmt der Abstand 25 der Kopffläche 5 zur Zahnbreitfläche 9 stetig zu.

Bezüglich der in Fig.3c gezeigten Ausführung greift die vordere Sichtkante 16 ebenfalls linienförmig im Bereich der Zahnspitze 11 an der Zahnbreitfläche 9 an. Weiterhin zeigt Fig.3a eine bevorzugte Ausführungsform, in welcher die vordere Sichtkante 16, von der Unterkante 14 ausgehend, gegenüber der Zahnbreitfläche 9 mit zunehmender Zahnhöhe zurückspringt.

Der besondere Vorteil hierbei liegt darin, dass die Schränkeisen 6,6' allerhöchstens punktweise an der Zahnbreitfläche 9 klemmungsfrei anliegen. Die Schränkung des Zahns 10 wird hierbei im Zahnfußbereich des Zahns 10 eingeleitet und erfolgt mit einer besonders vorteilhaft ausgeprägten Seitenführung, da der Schneidenbereich des Zahns 10 erst gegen Ende des Schränkvorganges, unter zunehmender Seitenführung durch die Kopffläche 5, erreicht wird.

Insbesondere Fig.1 zeigt, dass die einander zugewandten Kopfflächen 5 der Schränkeisen 6,6' zumindest im Bereich ihrer jeweiligen vorderen Sichtkante 16 zwischen sich in der Grundstellung 7 einen Kopfflächenwinkel 23 einschließen, der größer oder höchstens gleich dem Schränkwinkel 24 ist, welcher die geschränkten Zähne einhüllt. Mit dieser Maßnahme wird sichergestellt, dass das geschränkte Sägeblatt 2 unter Freigabe der hydraulisch beaufschlagten Spannköpfe 4,4' berührungsfrei zwischen den sich in Grundstellung 7 befindlichen Schränkeisen hindurchgeführt werden kann, um in seinem weiteren Längsverlauf unter hydraulischer Beaufschlagung der Spannköpfe 4,4' mit einer Schränkung von nachfolgenden ungeschränkten Zähnen aus der Grundstellung 7 zu beginnen.

Insbesondere aus den Fig.2a und 2b wird ersichtlich, dass eine Folge von Zähnen mit unterschiedlich großen Schränkwinkeln 24 denkbar ist. Weiterhin können an dem Schränkeisen 6,6' eine Vielzahl von Paarungen von einander zugewandten Kopfflächen 5 vorgesehen sein, die jeweils unterschiedlich große Kopfflächenwinkel 23 einschließen. In diesem Fall ist der größte vorkommende Schränkwinkel 24 kleiner, als der kleinste vorkommende Kopfflächenwinkel, so dass auch in diesem Ausführungsfall der Erfindung das geschränkte Sägeblatt 2 berührungsfrei zwischen den sich in Grundstellung 7 befindlichen Schränkeisen 6,6' hindurchführbar ist.

Vorzugsweise wird mit einem Schränkvorgang zumindest ein Verzahnungsintervall des Sägeblatts 2 von den Schränkeisen 6,6' beaufschlagt. Das Verzahnungsintervall kann beispielsweise von einer Zahngruppe 18 gebildet werden, die eine variable Zahnteilung oder auch eine konstante Zahnteilung aufweisen kann. Hierbei sieht die Erfindung vor, dass jeweils eine Kopffläche 5 der Schränkeisen 6,6' einen vorbestimmten ungeschränkten Zahn 10 einer zu schränkenden Zahngruppe 18 zugeordnet ist und für eine individuelle Schränkung dieses Zahns 10 bemessen ist. Es können verschiedene Kopfflächen 5 an den Schränkeisen 6,6' jeweils unterschiedlichen Maßgaben, wie sie beispielhaft in den Fig.3a-c aufgeführt sind, unterworfen sein.

Insbesondere die Fig.2a und 2b zeigen, dass die geschränkten Zähne der Zahngruppe 18 in aufeinander folgender Weise abwechselnd nach links und nach rechts aus der Sägeblattebene ausgeschränkt sind.

Die Zahngruppe 18 ist in Zahnuntergruppen 33 unterteilt. Jeweils eine gerade Anzahl aufeinander folgender Zähne, mit jeweils gleich großen Ausschränkungen nach links und nach rechts, ist zu einer Zahnuntergruppe 33 zusammengefasst. In den gezeigten Fällen wird die Zahngruppe 18 aus zwei Zahnuntergruppen 33 gebildet. Auch eine Zahngruppe aus einer, drei oder mehr als drei Zahnuntergruppen 33 ist denkbar.

Insbesondere Fig.2a zeigt, dass alle links und rechts gerichteten Ausschränkungen von Ihrem Betrag her gleich bemessen sein können, also nicht gestuft ausgeführt sind. Demgegenüber zeigt Fig.2b, dass die jeweiligen Ausschränkungen von aufeinander folgenden Zahnuntergruppen 33 eine Stufenschränkung bilden, bis die nächste Zahngruppe beginnt, die ebenfalls derart ausgeführt sein kann, allerdings nicht näher dargestellt ist.

Insbesondere Fig.2a und Fig.2b zeigt eine Zahngruppe 18 mit Zähnen 19 zum Vorschneiden, Zähnen 20 zum Fertigschneiden und ungeschränkte Räumzähne 21.

Insbesondere Fig.2b zeigt, dass die geschränkten Zähne 20 zum Fertigschneiden gegenüber den geschränkten Zähne 19 zum Vorschneiden eine größere Ausschränkung aufweisen. Die Ausschränkung 26 für die Zähne 19 zum Vorschneiden kann beispielsweise im Bereich von 0,29 mm bis 0,35 mm liegen. Die hierzu größere Ausschränkung 27 der Zähne 20 zum Fertigschneiden kann beispielsweise in einem Bereich von 0,69 mm bis 0,75 mm liegen. Weiterhin zeigt Fig.2b in nachvollziehbarer Weise, dass obwohl die Unterkanten 14 aller gezeigten Kopfflächen 5 unter einem gleichen Drehschränkungswinkel 40 von der Zahnbreitfläche 9 abstehen, dennoch unterschiedlich bemessene Ausschränkungen 26,27 für die Zähne 19,20 möglich sind. Der Grund hierbei liegt darin, dass der Drehschränkungswinkel 40 zur Schränkung der Zähne 20 von der Unterkante 14 zur Oberkante 15 der jeweiligen Kopffläche 5 weniger stark an Größe zunimmt, als der Drehschränkungswinkel 40 zur Schränkung der Zähne 19.

Mit einer Stufenschränkung können Sägeblätter geschaffen werden, mit denen beispielsweise große Profilträger oder große Werkstücke mit hohen Eigenspannungen besonders vorteilhaft zerteilt werden können.

Weiterhin zeigt Fig.2a und Fig.2b, dass zur Vermeidung einer Beaufschlagung der Räumzähne 21 durch die Kopfflächen 5 der Schränkeisen 6,6' zwischen den Kopfflächen 5 in Längsrichtung des Sägeblatts 2 verlaufende Lücken vorgesehen sind, mit denen beim Schränkvorgang keine Schränkung der Räumzähne 21 erfolgt.

Wie bereits eingangs erwähnt, empfiehlt es sich, die aus dem oben genannten Europäischen Patent bekannte Vorrichtung dahingehend umzurüsten, dass z.B. deren zwei Schränktrommeln zur Aufnahme von erfindungsgemäßen Schränkeisen 6,6' vorgerichtet werden. Insbesondere Fig.2a und Fig.2b zeigt hierzu, dass dies in besonders einfacher Weise geschehen kann. Die dort gezeigten Schränkeisen 6,6' sind mit Langlochnuten 32 versehen, um eine auswechselbare Anbringung der Schränkeisen 6,6' zum Beispiel auf Schränktrommeln oder ähnlich gelagerte Werkzeugträger durch einfaches und schnelles Aufschrauben zu ermöglichen.

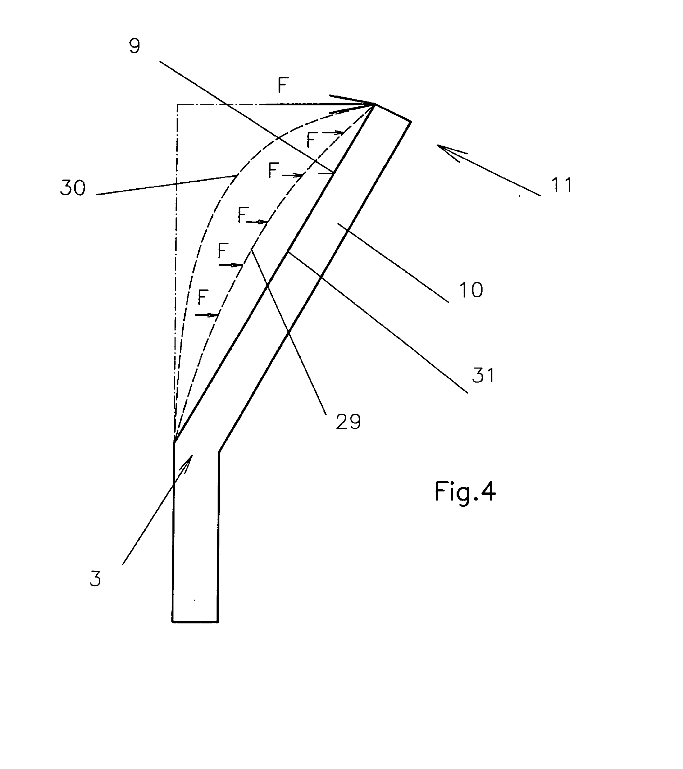

Insbesondere Fig.4 stellt in schematischer Weise wesentliche Merkmale, auf denen die Erfindung beruht, dar. Hierzu zeigt Fig.4 einen erfindungsgemäßen Schränkverlauf 29 der Zahnbreitfläche 9, an einem im Querschnitt gezeigten Zahn 10. Demgegenüber zeigt Fig.4 weiterhin einen ersten konventionellen Schränkverlauf 30 der zahnbreitfläche 9, wie er durch einen punktuellen Angriff im Bereich der Zahnspitze 11 hervorgerufen wird und einen zweiten konventionellen Schränkverlauf 31, der einen linienorientierten Biegebereich entlang der Zahnfußlinie 3 aufweist. Die Ausschränkung des Zahns 10 ist bei allen drei Fällen gleich.

Wesentlich ist nun, dass sich, bei gleicher Ausschränkung des Zahns 10, die plastische Ausformung der Schränkung gemäß des erfindungsgemäßen Schränkverlaufs 29 aus der Summe von infinitesimal kleinen Biegeschritten entlang der Zahnhöhe ergibt. Die jeweilige Angriffskraft der einzelnen Biegeschritte, welche für eine plastische Verformung des Zahns naturgemäß derart bemessen ist, dass ein Rückfedern des Zahns berücksichtigt wird, kann durch die erfindungsgemäß vorgebbare Kontur der Kopffläche 5 zur Zahnbreitfläche 9 des ungeschränkten Zahns 10 vorbestimmt werden. Hieraus ergibt sich eine feine Verteilung von kleinen Eigenspannungen entlang der Zahnlänge und der Zahnhöhe, die durchaus einen homogenen Charakter annehmen können. Eine Konzentration von hohen Eigenspannungen nach der Schränkung im Bereich der Zahnspitze, wie im Schränkverlauf 30, oder in einem linienförmigen Biegebereich, wie im Schränkverlauf 31, findet nicht statt. Stattdessen werden erfindungsgemäß kleine Eigenspannungen im gesamten Zahn verteilt und die Gefahr von Zahnbruch herabgesetzt.

### Bezugszeichenliste

- 1: Vorrichtung
- 2: Sägeblatt
- 3: Zahnfußlinie
- 4: Spannkopf
- 4': Spannkopf
- 5: Kopffläche
- 6: Schränkeisen
- 6': Schränkeisen
- 7: Grundstellung
- 8: Abstand
- 9: Zahnbreitfläche
- 10: Zahn
- 11: Zahnspitze
- 12: Zahnrücken
- 13: Zahngrund
- 14: Unterkante
- 15: Oberkante
- 16: vordere Sichtkante
- 17: hintere Sichtkante
- 18: Zahngruppe
- 19: Zahn zum Vorschneiden
- 20: Zahn zum Fertigschneiden
- 21: Räumzahn
- 22: Höhenlinie
- 23: Kopfflächenwinkel
- 24: Schränkwinkel
- 25: Abstand
- 26: Ausschränkung an 19
- 27: Ausschränkung an 20
- 28: Höheneinstellvorrichtung
- 29: erfindungsgemäßer Schränkverlauf
- 30: konventioneller Schränkverlauf
- 31: konventioneller Schränkverlauf
- 32: Langlochnut
- 33: Zahnuntergruppe
- 40: Drehschränkungswinkel
- 40': Drehschränkungswinkel

## Patentansprüche

1. Vorrichtung (1) zum Schränken von Sägeblättern (2) mit jeweils beidseits des Sägeblatts (2) angeordneten, das Sägeblatt (2) unterhalb der Zahnfußlinie (3) einspannenden Spannköpfen (4,4'), sowie oberhalb der Zahnfußlinie (3) angeordneten und mit Kopfflächen (5) voran aus beiden Richtungen quer zum Sägeblatt (2) gegen die Zähne beweglichen Schränkeisen (6,6'), wobei die Schränkeisen (6,6') mit ihren Kopfflächen (5) in einer Grundstellung (7) klemmungsfrei am Sägeblatt (2) anliegen, **dadurch gekennzeichnet, dass** in der Grundstellung (7) der Abstand (8) zwischen der Zahnbreitfläche (9) eines jeweils ungeschränkten Zahns (10) und derjenigen Kopffläche (5) des Schränkeisens (6,6'), mit welcher der Zahn (10) geschränkt wird, von oben auf den Zahn (10) gesehen von dessen Zahnspitze (11) entlang des Zahnrückens (12) in Richtung zum Zahngrund (13) des nachfolgenden Zahns größer wird.

2. Vorrichtung (1) nach Anspruch 1, **dadurch gekennzeichnet, dass** die Kopfflächen (5), in Längsrichtung auf die Schmalseite des Zahnrückens (12) eines Zahns (10) gesehen, eine von der Unterkante (14) der jeweiligen Kopffläche (5) kommende, in Höhenrichtung des Zahns (10) zu der Oberkante (15) der jeweiligen Kopffläche (5) verlaufende, der Zahnspitze (11) zugewandte vordere Sichtkante (16) und eine ebenso verlaufende, dem Zahngrund (13) zugewandte hintere Sichtkante (17) aufweisen.

3. Vorrichtung (1) nach Anspruch 2, **dadurch gekennzeichnet, dass** die zur Unterkante (14) parallel liegenden und zwischen den Sichtkanten (16,17) verlaufenden Höhenlinien (22) der jeweiligen Kopffläche (5) von der Unterkante (14) zur Oberkante (15) der Kopffläche (5) einen gleich bleibenden Abstand (25) zur Zahnbreitfläche (9) aufweisen.

4. Vorrichtung (1) nach Anspruch 2, **dadurch gekennzeichnet, dass** die zur Unterkante (14) parallel liegenden und zwischen den Sichtkanten (16,17) verlaufenden Höhenlinien (22) der jeweiligen Kopffläche (5) von der Unterkante (14) zur Oberkante (15) der Kopffläche (5) einen zunehmenden Abstand (25) zur Zahnbreitfläche (9) aufweisen.

5. Vorrichtung (1) nach einem der Ansprüche 2 bis 4, **dadurch gekennzeichnet, dass** die einander zugewandten Kopfflächen (5) der Schränkeisen (6,6') zumindest im Bereich der vorderen Sichtkante (16) zwischen sich in der Grundstellung (7) einen Kopfflächenwinkel (23) einschließen, der größer oder höchstens gleich dem Schränkwinkel (24) ist, welcher die geschränkten Zähne einhüllt.

6. Vorrichtung (1) nach Anspruch 5, **dadurch gekennzeichnet, dass** die geschränkten Zähne eine Folge aus Zähnen mit unterschiedlich großen Schränkwinkeln (24) bilden und dass an den Schränkeisen (6,6') eine Vielzahl von Paarungen von einander zugewandten Kopfflächen (5) vorgesehen ist, die jeweils unterschiedlich große Kopfflächenwinkel (23) einschließen, wobei der größte vorkommende Schränkwinkel (24) kleiner ist, als der kleinste vorkommende Kopfflächenwinkel (23).

7. Vorrichtung (1) nach einem der Ansprüche 1 bis 6, **dadurch gekennzeichnet, dass** das Schränkeisen (6,6') jeder Seite auf einer kreisförmigen Führungsbahn geführt ist, wobei alle Kopfflächen (5) des jeweiligen Schränkeisens (6,6') entlang einer gemeinsamen Anlegelinie klemmungsfrei am Sägeblatt anliegen und wobei die Drehachse der jeweiligen Führungsbahn des Schränkeisens (6,6') mit der jeweiligen Anlegelinie des Schränkeisens (6,6') zusammenfällt.

8. Vorrichtung (1) nach einem der Ansprüche 1 bis 7, **dadurch gekennzeichnet, dass** jeweils eine Kopffläche (5) der Schränkeisen (6,6') einen vorbestimmten ungeschränkten Zahn (10) einer zu schränkenden Zahngruppe (18) zugeordnet ist und für eine individuelle Schränkung dieses Zahns (10) bemessen ist.

9. Vorrichtung (1) nach Anspruch 8, **dadurch gekennzeichnet, dass** die geschränkten Zähne der Zahngruppe (18) in aufeinander folgender Weise abwechselnd nach links und nach rechts aus der Sägeblattebene ausgeschränkt sind.

10. Vorrichtung (1) nach Anspruch 9, **dadurch gekennzeichnet, dass** die Zahngruppe (18) in Zahnuntergruppen (33) unterteilt ist, wobei jeweils eine gerade Anzahl aufeinander folgender Zähne mit jeweils gleichgroßen Ausschränkungen in unterschiedlichen Richtungen zu einer Zahnuntergruppe zusammengefasst ist und wobei die jeweiligen Ausschränkungen von aufeinander folgenden Zahnuntergruppen (33) eine Stufenschränkung bilden, bis die nächste Zahngruppe beginnt.

11. Vorrichtung (1) nach Anspruch 10, **dadurch gekennzeichnet, dass** die Zahngruppe (18) Zähne (19) zum Vorschneiden, Zähne (20) zum Fertigschneiden und ungeschränkte Räumzähne (21) aufweist, wobei die geschränkten Zähne (20) zum Fertigschneiden gegenüber den geschränkten Zähnen (19) zum Vorschneiden eine größere Ausschränkung aufweisen.

12. Vorrichtung (1) nach Anspruch 11, **dadurch gekennzeichnet, dass** die Schränkeisen (6,6') zwischen den Kopfflächen (5) in Längsrichtung des Sägeblatts (2) verlaufende Lücken aufweisen, mit denen beim Schränkvorgang keine Schränkung der Räumzähne (21) erfolgt.

13. Vorrichtung (1) nach einem der Ansprüche 1 bis 12, **dadurch gekennzeichnet, dass** die Kopffläche (5) gegenüber der Zahnbreitfläche (9) eines zu schränkenden Zahns (10), ausgehend von dessen Zahnspitze (11) und der Unterkante (14) der Kopffläche (5), unter einem vorbestimmten Drehschränkungswinkel (40) zurückspringt.

14. Vorrichtung (1) nach Anspruche 13, **dadurch gekennzeichnet, dass** der Drehschränkungswinkel (40) von der Unterkante (14) zur Oberkante (15) der Kopffläche (5) größer wird.

15. Vorrichtung (1) nach einem der Ansprüche 1 bis 14, **dadurch gekennzeichnet, dass** die Schränkeisen (6,6') vorgerichtet sind zur Aufnahme an den Werkzeughaltern einer Schränkmaschine mit zwei Schränktrommeln, mittels denen die Schränkeisen (6,6') mit ihren Unterkanten (14) auf einer zu den jeweiligen Zahnfußlinien (3) kreisförmigen Bahn geführt werden.
